# EUROPÄISCHE PATENTSCHRIFT

(11) **EP 1 572 582 B1**
(45) Veröffentlichungstag und Bekanntmachung des Hinweises auf die Patenterteilung: **19.07.2006**
(21) Anmeldenummer: 03789224.7
(22) Anmeldetag: 11.12.2003
(51) Int. Cl.: C01B 7/04, B01J 8/06

(54) **VERFAHREN ZUR HERSTELLUNG VON CHLOR DURCH GASPHASENOXIDATION VON CHLORWASSERSTOFF**
METHOD FOR THE PRODUCTION OF CHLORINE BY MEANS OF GAS PHASE OXIDATION OF HYDROGEN CHLORIDE
PROCEDE POUR PRODUIRE DU CHLORE PAR OXYDATION EN PHASE GAZEUSE DE CHLORURE D'HYDROGENE

(30) Priorität: 12.12.2002 DE 10258153
(43) Veröffentlichungstag der Anmeldung: 14.09.2005
(73) Patentinhaber: BASF Aktiengesellschaft, 67056 Ludwigshafen (DE)
(72) Erfinder: OLBERT, Gerhard, 69221 Dossenheim (DE); WALSDORFF, Christian, 67059 Ludwigshafen (DE); HARTH, Klaus, 67317 Altleiningen (DE); STRÖFER, Eckhard, 68163 Mannheim (DE); FIENE, Martin, 67150 Niederkirchen (DE)
(74) Vertreter: Isenbruck, Günter
(86) Internationale Anmeldenummer: PCT/EP2003/014073
(87) Internationale Veröffentlichungsnummer: WO 2004/052776

(56) Entgegenhaltungen:
- EP-A- 1 251 100
- WO-A-00/54877
- GB-A- 1 192 666

## Beschreibung

Die Erfindung betrifft ein Verfahren zur Herstellung von Chlor durch Gasphasenoxidation von Chlorwasserstoff in Gegenwart eines Festbettkatalysators.

Das von Deacon 1868 entwickelte Verfahren der katalytischen Chlorwasserstoffoxidation mit Sauerstoff in einer exothermen Gleichgewichtsreaktion steht am Anfang der technischen Chlorchemie. Durch die Chloralkalielektrolyse wurde das Deacon-Verfahren stark in den Hintergrund gedrängt, die nahezu gesamte Produktion von Chlor erfolgte durch Elektrolyse wässriger Kochsalzlösungen.

Die Attraktivität des Deacon-Verfahrens nimmt jedoch in jüngerer Zeit wieder zu, da der weltweite Chlorbedarf stärker als die Nachfrage nach Natronlauge wächst. Dieser Entwicklung kommt das Verfahren zur Herstellung von Chlor durch Oxidation von Chlorwasserstoff entgegen, das von der Natronlaugeherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an. Der bei der Isocyanat-Herstellung gebildete Chlorwasserstoff wird überwiegend in der Oxichlorierung von Ethylen zu 1,2-Dichlorethan eingesetzt, das zu Vinylchlorid und weiter zu PVC verarbeitet wird. Beispiele für weitere Verfahren, bei denen Chlorwasserstoff anfällt, sind die Vinylchlorid-Herstellung, die Polycarbonat-Herstellung oder das PVC-Recycling.

Die Oxidation von Chlorwasserstoff zu Chlor ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedrigerer Temperatur ablaufen lassen. Derartige Katalysatoren sind insbesondere Katalysatoren auf Basis von Ruthenium, beispielsweise die in DE-A 197 48 299 beschriebenen geträgerten Katalysatoren mit der Aktivmasse Rutheniumoxid oder Rutheniummischoxid, wobei der Gehalt an Rutheniumoxid 0,1 bis 20 Gew.-% und der mittlere Teilchendurchmesser von Rutheniumoxid 1,0 bis 10,0 nm beträgt. Weitere geträgerte Katalysatoren auf Basis von Ruthenium sind aus DE-A 197 34 412 bekannt: Rutheniumchloridkatalysatoren, die mindestens eine der Verbindungen Titanoxid und Zirkoniumoxid enthalten, Ruthenium-Carbonyl-Komplexe, Rutheniumsalze anorganischer Säuren, Ruthenium-Nitrosyl-Komplexe, Ruthenium-Amin-Komplexe, Rutheniumkomplexe organischer Amine oder Ruthenium-Acetylacetonat-Komplexe.

Ein bekanntes technisches Problem bei Gasphasenoxidationen, vorliegend der Oxidation von Chlorwasserstoff zu Chlor, ist die Bildung von Hot-Spots, das heißt von lokalen Überhitzungen, die zur Zerstörung des Katalysator- und Kontaktrohrmaterials führen können. Um die Bildung von Hot-Spots zu reduzieren bzw. zu verhindern, wurde daher in WO 01/60743 vorgeschlagen, Katalysatorfüllungen einzusetzen, die in unterschiedlichen Bereichen der Kontaktrohre jeweils unterschiedliche Aktivität aufweisen, das heißt Katalysatoren mit an das Temperaturprofil der Reaktion angepasster Aktivität. Ein ähnliches Ergebnis soll durch gezielte Verdünnung der Katalysatorschüttung mit Inertmaterial erreicht werden.

Nachteilig an diesen Lösungen ist, dass zwei oder mehrere Katalysatorsysteme entwickelt und in den Kontaktrohren eingesetzt werden müssen bzw. dass-durch Einsatz von Inertmaterial die Reaktorkapazität beeinträchtigt wird.

Demgegenüber war es Aufgabe der Erfindung, ein Verfahren zur Herstellung von Chlor durch Gasphasenoxidation von Chlorwasserstoff mit einem molekularen Sauerstoff enthaltenden Gasstrom in Gegenwart eines Festbett-Katalysators in großtechnischem Maßstab zur Verfügung zu stellen, das eine effektive Wärmeabführung gewährleistet und trotz des hochkorrosiven Reaktionsgemisches eine ausreichende Standzeit aufweist. Darüber hinaus soll die Hot-Spot-Problematik ohne bzw. mit einer geringeren Abstufung der Katalysatoraktivität bzw. ohne Verdünnung des Katalysators gemindert oder vermieden werden.

In einer Ausgestaltung war es Aufgabe der Erfindung, die Korrosionsprobleme an den Kontaktrohren im Umlenkbereich zu vermeiden und ein Verfahren mit höherer Querschnittsbelastung und somit höherer Reaktorkapazität zu ermöglichen.

Die Lösung geht aus von einem Verfahren zur Herstellung von Chlor durch Gasphasenoxidation von Chlorwasserstoff mit einem molekularen Sauerstoff enthaltenden Gasstrom in Gegenwart eines Festbettkatalysators.

Die Erfindung ist dadurch gekennzeichnet, dass man das Verfahren in einem Reaktor mit einem Bündel von parallel zueinander, in Reaktorlängsrichtung angeordneten Kontaktrohren durchführt, die an ihren Enden in Rohrböden befestigt sind, mit je einer Haube an beiden Enden des Reaktors, sowie mit einem oder mehreren, senkrecht zur Reaktorlängsrichtung im Zwischenraum zwischen den Kontaktrohren angeordneten Umlenkblechen, die alternierend einander gegenüberliegende Durchtrittsöffnungen an der Innenwand des Reaktors freilassen, wobei die Kontaktrohre mit dem Festbettkatalysator befüllt sind, der Chlorwasserstoff sowie der molekularen Sauerstoff enthaltende Gasstrom von einem Reaktorende über eine Haube durch die Kontaktrohre geleitet und das gasförmige Reaktionsgemisch vom entgegengesetzten Reaktorende über die zweite Haube abgezogen und durch den Zwischenraum um die Kontaktrohre ein flüssiges Wärmetauschmittel geleitet wird.

Erfindungsgemäß wird das Verfahren in einem Rohrbündelreaktor durchgeführt, mit zwischen den Kontaktrohren eingebauten Umlenkblechen. Dadurch wird eine überwiegende Queranströmung der Kontaktrohre durch das Wärmetauschmittel und bei gleichem Wärmetauschmittelstrom eine Erhöhung der Strömungsgeschwindigkeit des Wärmetauschmittels bewirkt und somit eine bessere Abführung der Reaktionswärme über das zwischen den Kontaktrohren zirkulierende Wärmetauschmittel.

Im vollberohrten Reaktor mit Umlenkblechen, die Durchtrittsöffnungen an der Innenwand des Reaktors freilassen, strömt jedoch das Wärmetauschmittel im Bereich der Durchtrittsöffnungen, das heißt in den Umlenkbereichen, weitgehend in Längsrichtung der Kontaktrohre. Dadurch werden die Kontaktrohre, die sich in diesen Umlenkbereichen befinden, schlechter gekühlt, mit der Folge, dass Korrosionsprobleme auftreten können.

Daher wird in einer besonders vorteilhaften Ausgestaltung das erfindungsgemäße Verfahren in einem Rohrbündelreaktor durchgeführt, der im Bereich der Durchtrittsöffnungen unberohrt ist.

In dieser Ausgestaltung wird eine definierte, nahezu reine Queranströmung der Kontaktrohre durch das Wärmetauschmittel gewährleistet. In der Folge ist der Wärmeübergangskoeffizient für alle Kontaktrohre über den Reaktorquerschnitt ähnlich, die Streuung des wärmetauschmittelseitigen Wärmeübergangskoeffizienten über den Reaktorquerschnitt liegt bei maximal ± 20 %.

Der Begriff Durchtrittsöffnung bezeichnet vorliegend den Bereich zwischen dem freien Ende eines Umlenkbleches und der Reaktorinnenwand.

Es wurde gefunden, dass durch die Freilassung des Reaktorinnenraums im Bereich der Durchtrittsöffnungen, das heißt, indem im Bereich der Durchtrittsöffnungen der Umlenkbleche keine Kontaktrohre angeordnet sind, die Kapazität eines Reaktors bei unverändertem Volumen des Innenraums und erhöhter Kühlmittelmenge um den Faktor 1,3 bis 2,0 gegenüber einem vollberohrten Reaktor erhöht werden kann, obwohl eine niedrigere Gesamtzahl von Kontaktrohren im Reaktor untergebracht ist.

Als flüssiges Wärmetauschmittel kann besonders vorteilhaft eine Salzschmelze, insbesondere die eutektische Salzschmelze von Kaliumnitrat und Natriumnitrit eingesetzt werden.

Für das erfindungsgemäße Verfahren können grundsätzlich alle bekannten Katalysatoren für die Oxidation von Chlorwasserstoff zu Chlor eingesetzt werden, beispielsweise die eingangs beschriebenen, aus DE-A 197 48 299 oder DE-A 197 34 412 bekannten Katalysatoren auf Basis von Ruthenium. Besonders geeignet sind auch die in DE 102 44 996.1 beschriebenen Katalysatoren auf Basis von Gold, enthaltend auf einem Träger 0,001 bis 30 Gew.-% Gold, 0 bis 3 Gew.-% eines oder mehrerer Erdalkalimetalle, 0 bis 3 Gew.-% eines oder mehrerer Alkalimetalle, 0 bis 10 Gew.-% eines oder mehrerer Seltenerden-Metalle und 0 bis 10 Gew.-% eines oder mehrerer weiterer Metalle, ausgewählt aus der Gruppe bestehend aus Ruthenium; Palladium, Platin, Osmium, Iridium, Silber, Kupfer und Rhenium, jeweils bezogen auf das Gesamtgewicht des Katalysators.

Das erfindungsgemäße Verfahren ist auch grundsätzlich nicht eingeschränkt bezüglich der Quelle für das Edukt Chlorwasserstoff. Beispielsweise kann als Edukt ein Chlorwasserstoffstrom eingesetzt werden, der in einem Verfahren zur Herstellung von Isocyanaten als Koppelprodukt anfällt, die in DE 102 35 476.6 beschrieben wird.

Der Reaktor für das erfindungsgemäße Verfahren ist bezüglich seiner Geometrie grundsätzlich nicht eingeschränkt. Bevorzugt ist er zylinderförmig ausgebildet, möglich sind jedoch auch Formen mit beispielsweise quadratischem oder rechteckigem Querschnitt.

Im Reaktor ist ein Bündel, das heißt eine Vielzahl von Kontaktrohren parallel zueinander in Reaktorlängsrichtung angeordnet. Die Anzahl der Kontaktrohre liegt bevorzugt im Bereich von 100 bis 20000, insbesondere von 5000 bis 15000.

Jedes Kontaktrohr weist bevorzugt eine Wandstärke im Bereich von 1,5 bis 5 mm, insbesondere von 2,0 bis 3,0 mm, und einen Rohrinnendurchmesser im Bereich von 10 bis 70 mm, bevorzugt im Bereich von 15 bis 30 mm auf.

Die Kontaktrohre weisen bevorzugt eine Länge im Bereich von 1 bis 10 m, insbesondere von 1,5 bis 8,0 m, besonders bevorzugt von 2,0 bis 7,0 m, auf.

Die Kontaktrohre sind bevorzugt derart im Reaktorinnenraum angeordnet, dass das Teilungsverhältnis, das heißt das Verhältnis zwischen dem Abstand der Mittelpunkte unmittelbar benachbarter Kontaktrohre und dem Außendurchmesser der Kontaktrohre im Bereich von 1,15 bis 1,6, bevorzugt im Bereich von 1,2 bis 1,4 liegt und dass die Kontaktrohre in Dreiecksteilung im Reaktor angeordnet sind.

Die Kontaktrohre sind bevorzugt aus Reinnickel oder aus einer Nickelbasislegierung gebildet.

Ebenso sind auch alle weiteren Bauteile des Reaktors, die mit der hochkorrosiven Reaktionsgasmischung in Berührung kommen, bevorzugt aus Reinnickel oder einer Nickelbasislegierung gebildet oder mit Nickel oder einer Nickelbasislegierung plattiert.

Bevorzugt werden als Nickelbasislegierungen Inconel 600 oder Inconel 625 eingesetzt. Die genannten Legierungen haben gegenüber Reinnickel den Vorteil einer erhöhten Temperaturfestigkeit. Inconel 600 enthält neben ca. 80 % Nickel noch rund 15 % Chrom sowie Eisen. Iconel 625 enthält überwiegend Nickel, 21 % Chrom, 9 % Molybdän sowie einige % Niob.

Die Kontaktrohre sind an beiden Enden in Rohrböden flüssigkeitsdicht befestigt, bevorzugt verschweißt. Die Rohrböden bestehen bevorzugt aus Kohlenstoff-Stahl der warmfesten Reihe, Edelstahl, zum Beispiel Edelstahl mit den Werkstoffnummern 1.4571 oder 1.4541 oder aus Duplexstahl (Werkstoffnummer 1.4462) und sind bevorzugt an der Seite, mit der das Reaktionsgas in Berührung kommt, mit Reinnickel oder einer Nickelbasislegierung plattiert. Die Kontaktrohre sind nur an der Plattierung mit den Rohrböden verschweißt.

Bevorzugt können die Kontaktrohre zusätzlich in den Rohrböden angewalzt sein.

Grundsätzlich kann jede verfahrenstechnische Möglichkeit zum Aufbringen der Plattierung eingesetzt werden, beispielsweise Walzplattierung, Sprengplattierung, Auftragschweißung oder Streifenplattierung.

Der Innendurchmesser des Reaktors beträgt, sofern es sich um einen zylinderförmigen Apparat handelt, 0,5 bis 5 m, bevorzugt 1,0 bis 3,0 m.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen.

In den Hauben sind bevorzugt Gasverteiler zur Vergleichmäßigung des Gasstromes angeordnet, beispielsweise in Form einer Platte, insbesondere einer perforierten Platte.

Ein besonders effektiver Gasverteiler ist in Form eines perforierten, sich in Richtung des Gasstromes verjüngenden Kegelstumpfes ausgebildet, dessen Perforationen an den Seitenflächen ein größeres Öffnungsverhältnis, von ca. 10 bis 20 %, gegenüber den Perforationen in der in den Reaktorinnenraum hineinragenden, kleineren Grundfläche, von ca. 2 bis 10 %, aufweisen.

Da die Hauben und Gasverteiler Bauteile des Reaktors sind, die mit dem hochkorrosiven Reaktionsgasgemisch in Berührung kommen, gilt das vorstehend bezüglich der Materialauswahl dargelegte, das heißt die Bauteile aus Reinnickel oder einer Nickelbasislegierung hergestellt oder damit plattiert sind.

Dies gilt insbesondere auch für Rohrleitungen, durch die das Reaktionsgasgemisch strömt oder statische Mischer, sowie für die Eindüsungsorgane, zum Beispiel das Einsteckrohr.

Im Zwischenraum zwischen den Kontaktrohren sind senkrecht zur Reaktorlängsrichtung ein oder mehrere Umlenkbleche angeordnet, die alternierend einander gegenüberliegende Durchtrittsöffnungen an der Reaktorinnenwand freilassen. Die Umlenkbleche bewirken eine Umlenkung des im Reaktorinnenraum, im Zwischenraum zwischen den Kontaktrohren zirkulierenden Wärmetauschmittels, dergestalt, dass die Kontaktrohre vom Wärmetauschmittel quer angeströmt werden, wodurch die Wärmeabführung verbessert wird. Um diese vorteilhafte Queranströmung der Kontaktrohre zu erreichen, müssen die Umlenkbleche alternierend an die einander gegenüberliegenden Seiten der Reaktorinnenwand Durchtrittsöffnungen für das Wärmetauschmittel freilassen.

Die Anzahl der Umlenkbleche beträgt bevorzugt etwa 6 bis 15. Vorzugsweise sind sie äquidistant zu einander angeordnet, besonders bevorzugt ist jedoch die unterste und die oberste Umlenkscheibe jeweils vom Rohrboden weiter entfernt als der Abstand zweier aufeinanderfolgende Umlenkscheiben zueinander, bevorzugt um etwa das 1,5-fache.

Die Form der freigelassenen Durchtrittsöffnungen ist grundsätzlich beliebig. Für den Fall eines zylindrischen Reaktors sind sie bevorzugt kreissegmentförmig.

Bevorzugt lassen alle Umlenkbleche jeweils gleiche Durchtrittsöffnungen frei.

Die Fläche jeder Durchtrittsöffnung beträgt bevorzugt 5 bis 30 %, insbesondere 8 bis 14 % des Reaktorquerschnitts.

Bevorzugt sind die Umlenkbleche nicht dichtend um die Kontaktrohre angeordnet, und lassen eine Leckageströmung von bis zu 30 Vol.-% des Gesamtstroms des Wärmetauschmittels zu. Hierzu sind zwischen den Kontaktrohren und Umlenkblechen Spalte im Bereich von 0,1 bis 0,4 mm, bevorzugt von 0,15 bis 0,30 mm zugelassen.

Es ist vorteilhaft, die Umlenkbleche mit Ausnahme der Bereiche der Durchtrittsöffnungen zur Reaktorinnenwand hin flüssigkeitsdicht zu gestalten, so dass dort kein zusätzlicher Leckagestrom auftritt.

Besonders vorteilhaft können in diesen Bereichen, in denen sich keine Durchtrittsöffnungen befinden, am Reaktorinnenmantel zwischen den Umlenkblechen vertikale Blechstreifen für eine zusätzliche Bypassverhinderung zwischen den Kontaktrohren und dem Reaktorinnenmantel vorgesehen sein.

Für denselben Einsatzzweck eignen sich auch Dummy-Rohre, insbesondere Vollmaterialrohre, bevorzugt mit gleichem Außendurchmesser wie die Kontaktrohre, oder andere Ver-Verdrängerkörper. Die Dummy-Rohre oder andere Verdrängungskörper sind bevorzugt nicht in den Rohrböden eingeschweißt, sondern nur in den Umlenkblechen geheftet.

Die Umlenkbleche können bevorzugt aus dem gleichen Material wie die Rohrböden, das heißt aus Kohlenstoffstahl der warmfesten Reihe, Edelstahl mit den Werkstoffnummern 1.4571 oder 1.4541 oder aus Duplexstahl (Werkstoffnummer 1.4462), bevorzugt in einer Dicke von 6 bis 30 mm, bevorzugt von 10 bis 20 mm, gebildet sein.

Die Kontaktrohre sind mit einem Feststoffkatalysator gefüllt. Die Katalysatorschüttung in den Kontaktrohren weist bevorzugt ein Lückenvolumen von 0,15 bis 0,55, insbesondere von 0,20 bis 0,45, auf.

Besonders bevorzugt ist der der Zuführung des gasförmigen Reaktionsgemisches zugewandte Bereich der Kontaktrohre auf eine Länge von 5 bis 20 %, bevorzugt auf eine Länge von 5 bis 10 %, der Gesamtrohrlänge der Kontaktrohre mit einem Inertmaterial befüllt.

Zum Ausgleich von thermischen Ausdehnungen sind im Reaktormantel vorteilhaft ein oder mehrere ringförmig am Reaktormantel angebrachte Kompensatoren vorgesehen.

Die Zu- und Abführung des Wärmetauschmittels in bzw. aus dem Zwischenraum zwischen den Kontaktrohren erfolgt bevorzugt über Stutzen oder Teilringkanäle am Reaktormantel, die Öffnungen zum Reaktorinnenraum aufweisen, bevorzugt mit kreisförmigem oder rechteckigem Querschnitt und mit einem Öffnungsverhältnis im Bereich von 5 bis 50 %, bevorzugt von 15 bis 30 %.

Bevorzugt wird das Wärmetauschmittel über eine Pumpe über einen außenliegenden Kühler geleitet, wobei Pumpe und Kühler parallel zur Reaktorlängsrichtung am Reaktoraußenmantel angeordnet sind. Bevorzugt wird lediglich ein Teilstrom von 15 % des gesamten Wärmetauschmittelstromes über ein Regelventil über den außenliegenden Kühler geleitet.

Das Verfahren ist grundsätzlich nicht eingeschränkt bezüglich der Strömungsführung für das Reaktionsgasgemisch wie auch für das Wärmetauschmittel, das heißt beide können jeweils von oben nach unten oder von unten nach oben durch den Reaktor geführt werden. Jede Kombination der Strömungsführung von Reaktionsgasgemisch und Wärmetauschmittel ist möglich.

Es ist bevorzugt, den Reaktor in Bezug auf eine Querschnittsebene in der Reaktormitte symmetrisch auszubilden. Gemäß dieser bevorzugten Ausführungsform weist somit ein aufrechtstehender Reaktor jeweils einen identischen unteren und oberen Teil auf. Darunter wird auch verstanden, dass alle Anschlüsse sowie die Reaktorpratzen, die der Reaktorabstützung dienen, symmetrisch ausgebildet sind. Der Katalysator wird, je nach Reaktionsfortschritt, als Folge der Wanderung der Hot-Spot-Zone unterschiedlich verbraucht. Analog werden die Kontaktrohre in unterschiedlichen Bereichen verschieden beansprucht, mit stärkster Beanspruchung im Bereich der Hot-Spot-Zone. In dieser Hot-Spot-Zone kommt es zuerst zum Abtrag der Innenwand der Kontaktrohre und zur Gefahr, dass die Kontaktrohre undicht werden. Dieser Gefahr kann durch die oben beschriebene symmetrische Ausführungsform vorgebeugt werden, bei der es möglich ist, den Reaktor rechtzeitig vor dem Erreichen eines bestimmten kritischen Abtrages zu drehen wobei dann der Hot-Spot-Bereich auf einen zuvor weniger beanspruchten Teil der Kontaktrohre trifft. Dadurch lässt sich die Betriebszeit des Reaktors beträchtlich steigern, häufig verdoppeln.

Auf das Temperaturprofil im Reaktionsverlauf kann besonders gut eingegangen werden, indem man das Verfahren in einem Reaktor durchführt, der zwei oder mehrere Reaktionszonen aufweist. Es ist gleichermaßen möglich, anstelle eines einzigen Reaktors mit zwei oder mehreren Reaktionszonen das Verfahren in zwei oder mehreren getrennten Reaktoren durchzuführen.

Wird das Verfahren in zwei oder mehreren getrennten Reaktoren durchgeführt, so können sich die Kontaktrohre bevorzugt von einem Reaktor zum anderen in ihrem Innendurchmesser unterscheiden. Es können insbesondere Reaktoren, in denen besonders Hot-Spot gefährdete Reaktionsteilabschnitte verlaufen, mit Kontaktrohren mit geringerem Rohrinnendurchmesser ausgestattet werden im Vergleich zu den übrigen Reaktoren. Dadurch wird eine verbesserte Wärmeabführung in diesen besonders gefährdeten Bereichen gewährleistet.

Zusätzlich oder alternativ ist es auch möglich, im Hot-Spot gefährdeten Reaktionsteilabschnitt zwei oder mehrere Reaktoren parallel zueinander anzuordnen, mit anschließender Zusammenführung des Reaktionsgemisches über einen Reaktor.

Im Falle der Ausgestaltung eines Reaktors mit mehreren Zonen, bevorzugt mit 2 bis 8, besonders bevorzugt mit 2 bis 6 Reaktionszonen, werden diese durch Trennbleche weitgehend flüssigkeitsdicht voneinander getrennt. Unter weitgehend wird vorliegend verstanden, dass eine vollständige Trennung nicht zwingend erforderlich ist, sondern dass fertigungstechnische Toleranzen erlaubt sind.

So wird eine weitgehende Trennung schon dadurch erreicht, dass das Trennblech in relativ großer Dicke, von etwa 15 bis 60 mm, ausgebildet ist, wobei ein feiner Spalt zwischen dem Kontaktrohr und dem Trennblech, von etwa 0,1 bis 0,25 mm erlaubt ist. Dadurch ist es insbesondere auch möglich, die Kontaktrohre bei Bedarf einfach auszutauschen.

In einer bevorzugten Ausgestaltung kann die Abdichtung zwischen den Kontaktrohren und den Trennblechen verbessert werden, indem die Kontaktrohre leicht angewalzt oder hydraulisch aufgeweitet werden.

Da die Trennbleche mit dem korrosiven Reaktionsgemisch nicht in Kontakt treten, ist die Materialwahl für die Trennbleche nicht kritisch. Hierfür kann beispielsweise dasselbe Material wie für den die Plattierung tragenden Teil der Rohrböden, das heißt Kohlenstoff-Stahl der warmfesten Reihe, Edelstahl, zum Beispiel Edelstahl mit den Werkstoffnummern 1.4571 oder 1.4541 oder Duplexstahl (Werkstoffnummer 1.4462), verwendet werden.

Bevorzugt sind für das Wärmetauschmittel im Reaktormantel und/oder in den Rohrböden und/oder in den Trennblechen Entlüftungs- und Ablaufbohrungen vorgesehen, insbesondere an mehreren, bevorzugt an 2 bis 4 symmetrisch über den Reaktorquerschnitt verteilten Stellen, deren Öffnungen nach außen, bevorzugt in auf der Reaktoraußenwand oder auf den Rohrböden außerhalb des Reaktors aufgeschweißten Halbschalen münden.

Im Falle eines Reaktors mit zwei oder mehreren Reaktionszonen ist es vorteilhaft, dass jede Reaktionszone mindestens einen Kompensator zum Ausgleich von thermischen Spannungen aufweist.

In der Verfahrensvariante mit mehreren Reaktoren ist eine Zwischeneinspeisung von Sauerstoff vorteilhaft, vorzugsweise über ein Lochblech in der unteren Reaktorhaube, das für eine gleichmäßigere Verteilung sorgt. Das Lochblech weist bevorzugt einen Perforationsgrad von 0,5 bis 5 % auf. Da es in unmittelbarem Kontakt mit dem hochkorrosiven Reaktionsgemisch steht, wird es bevorzugt aus Nickel oder einer Nickelbasislegierung hergestellt.

Im Falle einer Ausführungsform mit zwei oder mehreren, unmittelbar übereinander angeordneten Reaktoren, das heißt in einer besonders platzsparenden Konstruktionsvariante, unter Verzicht auf die untere Haube des jeweils höher angeordneten und die obere Haube des jeweils darunter angeordneten Reaktors ist es möglich, die Zwischeneinspeisung von Sauerstoff zwischen zwei, unmittelbar übereinander angeordneten Reaktoren, über eine außen aufgeschweißte Halbschale, über gleichmäßig am Reaktorumfang verteilte Bohrungen, vorzunehmen.

Bevorzugt sind zwischen den einzelnen Reaktoren, nach der Zwischeneinspeisung von Sauerstoff, statische Mischer angeordnet.

Bezüglich der Materialauswahl für die statischen Mischer gilt das eingangs allgemein für Bauteile, die mit dem Reaktionsgasgemisch in Berührung kommen, Ausgeführte, das heißt dass Reinnickel oder Nickelbasislegierungen bevorzugt sind.

Im Verfahren mit mehreren Reaktoren ist es möglich, eine Zwischeneinspeisung von Sauerstoff über ein perforiertes, bevorzugt gekrümmtes Einsteckrohr vorzunehmen, das in das Verbindungsrohr zwischen zwei Reaktoren mündet.

Die Erfindung wird im Folgenden anhand einer Zeichnung näher erläutert.

Es zeigen im Einzelnen:
- Figur 1: eine erste bevorzugte Ausführungsform eines Reaktors für das erfindungsgemäße Verfahren im Längsschnitt mit Kreuzgegenstromführung von Reaktionsgemisch und Wärmetauschmittel, mit
- Querschnittsdarstellung in Fig. 1A,
- vergrößerter Darstellung der Rohrteilung in Fig. 1B und
- vergrößerter Darstellung der Anordnung von Kontaktrohren und Umlenkblechen in Fig. 1C,
- Figur 2: eine weitere bevorzugte Ausführungsform wie eines Reaktors im Längsschnitt, mit Kreuzgegenstromführung von Reaktionsgemisch und Wärmetauschmittel, wobei der Reaktor im Bereich der Durchtrittsöffnungen unberohrt ist, mit Querschnittsdarstellung in Fig. 2A,
- Figur 3: eine weitere Ausführungsform eines mehrzonig ausgebildeten Reaktors,
- Figur 4: eine Ausführungsform mit zwei hintereinander geschalteten Reaktoren,
- Figur 5: eine Ausführungsform mit zwei kompakt angeordneten Reaktoren mit statischen Mischern zwischen den Reaktoren,
- Figur 6: eine Ausführungsform mit zwei hintereinander geschalteten Reaktoren,
- Figur 7: eine weitere Ausführungsform mit zwei Reaktoren,
- Figur 8: die Darstellung einer Ausführungsform eines Reaktors im Längsschnitt mit Darstellung des Wärmetauschmittelkreises,
- Figur 9A: eine gewinkelte Entlüftungsbohrung im Rohrboden,
- Figur 9B: eine Entlüftungsbohrung am Reaktormantel,
- Figur 10: eine Verbindung der Kontaktrohre mit der Plattierung des Rohrbodens und
- Figur 11: eine Verbindung zwischen Kontaktrohr und Trennblech.

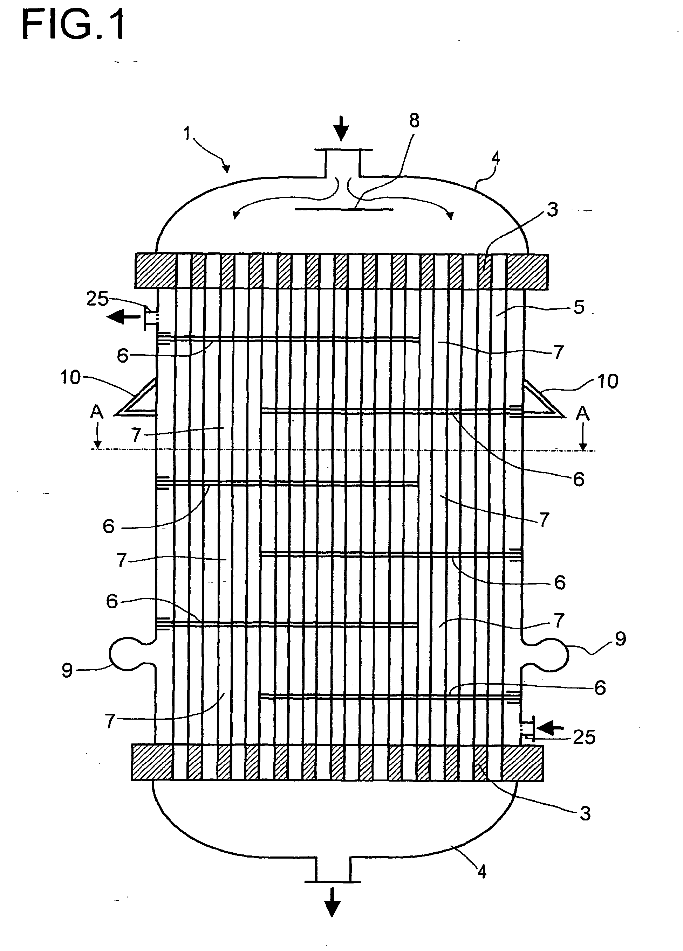

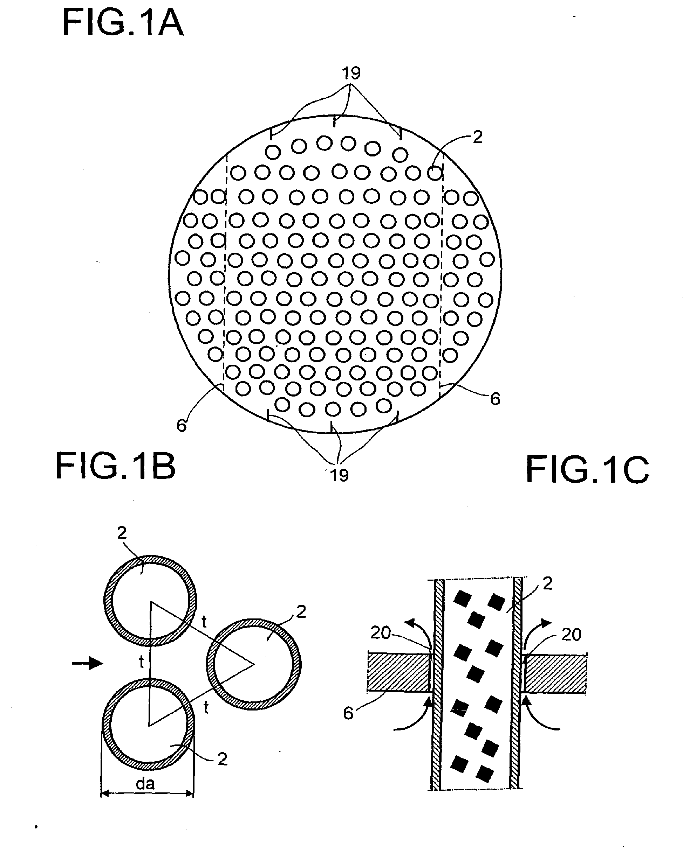

Figur 1 zeigt eine erste Ausführungsform eines Reaktors 1 für das erfindungsgemäße Verfahren im Längsschnitt, mit Kontaktrohren 2, die in Rohrböden 3 befestigt sind.

Beide Reaktorenden sind nach außen durch Hauben 4 begrenzt. Durch eine Haube erfolgt die Zuführung des Reaktionsgemisches zu den Kontaktrohren 2, durch die Haube am anderen Ende des Reaktors 1 wird der Produktstrom abgezogen. In den Hauben sind bevorzugt Gasverteiler zur Vergleichmäßigung des Gasstromes angeordnet, beispielsweise in Form einer Platte 8, insbesondere einer perforierten Platte.

Im Zwischenraum zwischen den Kontaktrohren 2 sind Umlenkbleche 6 angeordnet, in Fig. 1 sind beispielhaft sechs Umlenkbleche 6 dargestellt. Die Umlenkbleche 6 lassen alternierend einander gegenüberliegende Durchtrittsöffnungen 7 an der Reaktorinnenwand frei. In der beispielhaften Darstellung in Fig. 1 wird das Reaktionsgemisch von oben nach unten durch die Kontaktrohre und das Wärmetauschmittel im Kreuzgegenstrom, von unten nach oben, durch den Zwischenraum zwischen den Kontaktrohren 2 geleitet.

Die Querschnittsdarstellung in Fig. 1A zeigt Blechstreifen 19 am Reaktorinnenmantel, zur Verhinderung einer Bypassströmung.

Der Ausschnitt in Fig. 1B verdeutlicht die zur Berechnung des Teilungsverhältnisses erforderlichen geometrischen Größen Mittelpunktsabstand (t) und Außendurchmesser (dₐ) der Kontaktrohre 2.

Der Ausschnitt in Fig. 1C zeigt die Spalte 20 zwischen Kontaktrohren 2 und Umlenkblechen 6.

Am Reaktoraußenmantel sind Kompensatoren 9 sowie Pratzen 10 vorgesehen. Das Wärmetauschmittel wird über Stutzen 25 am Reaktormantel zu- bzw. abgeführt.

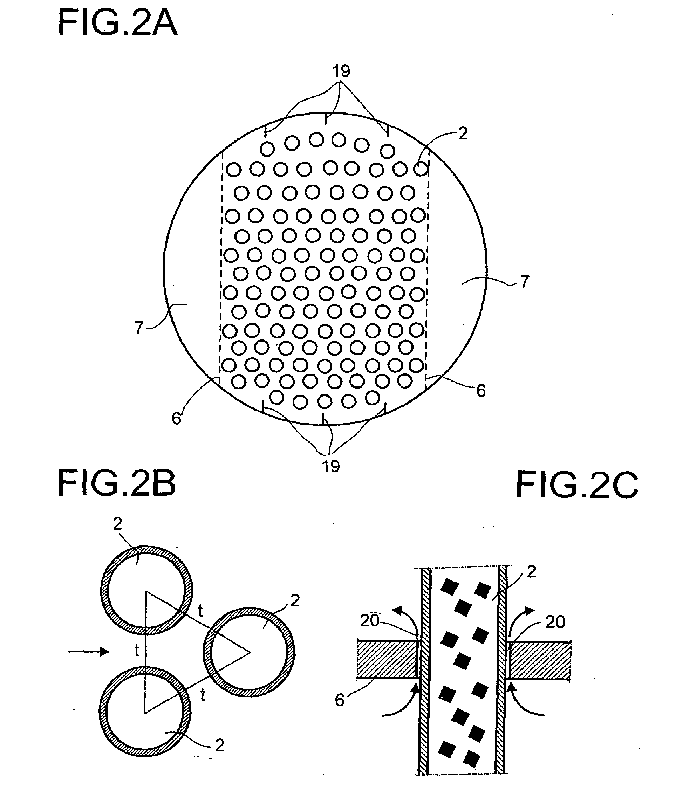

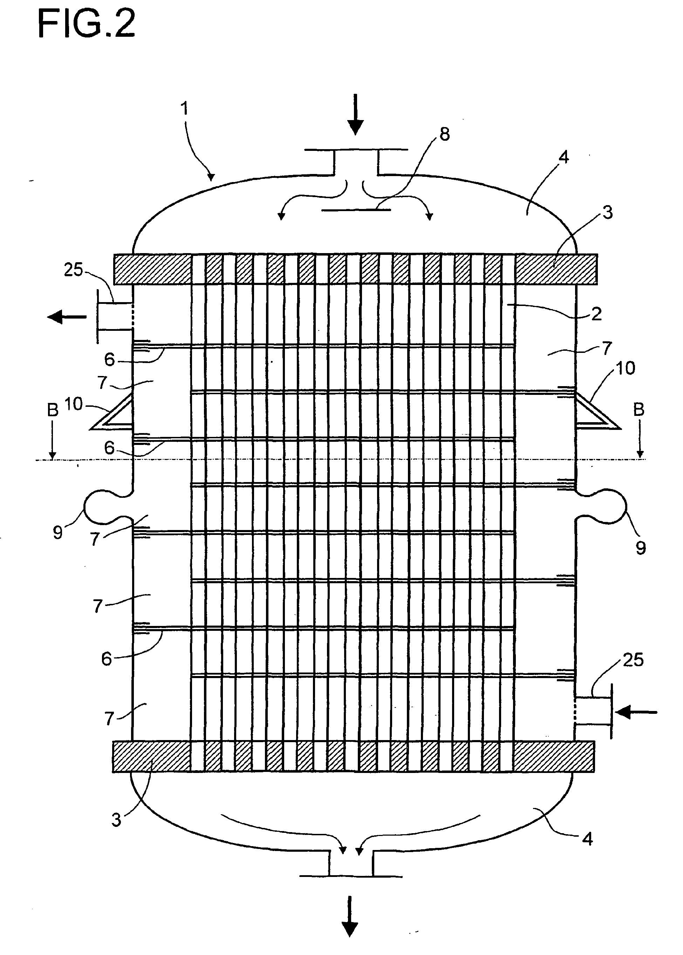

Die in Fig. 2 gleichfalls im Längsschnitt dargestellte weitere Ausführungsform unterscheidet sich von der vorhergehenden insbesondere dadurch, dass der Reaktorinnenraum im Bereich der Durchtrittsöffnungen 7 für das Wärmetauschmittel unberohrt ist.

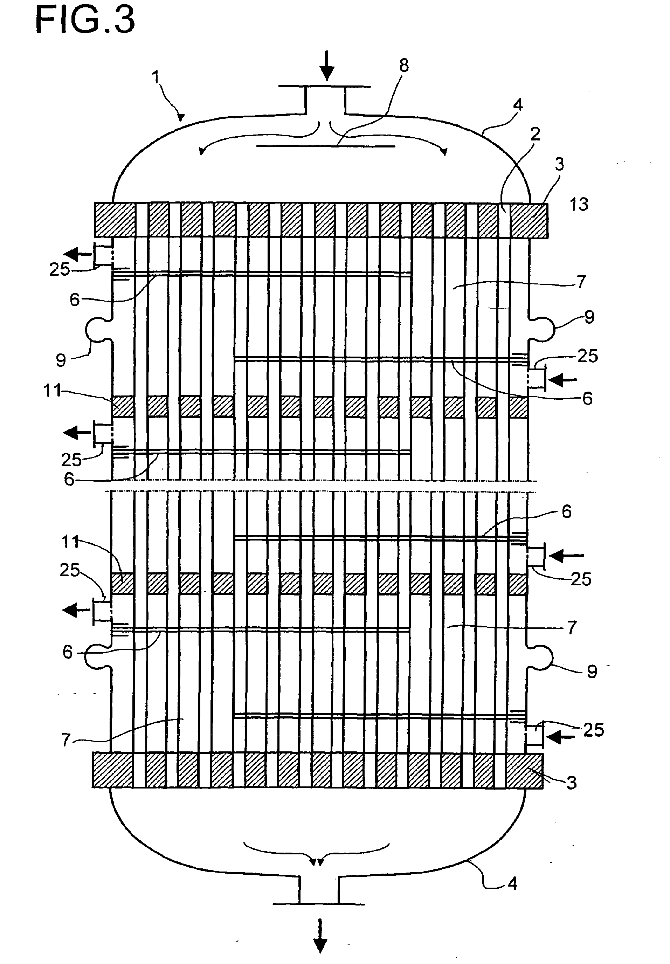

Die in Fig. 3 im Längsschnitt dargestellte Ausführungsform zeigt einen mehrzonigen, beispielhaft dreizonigen, Reaktor, dessen einzelne Reaktionszonen durch Trennbleche 11 voneinander getrennt sind.

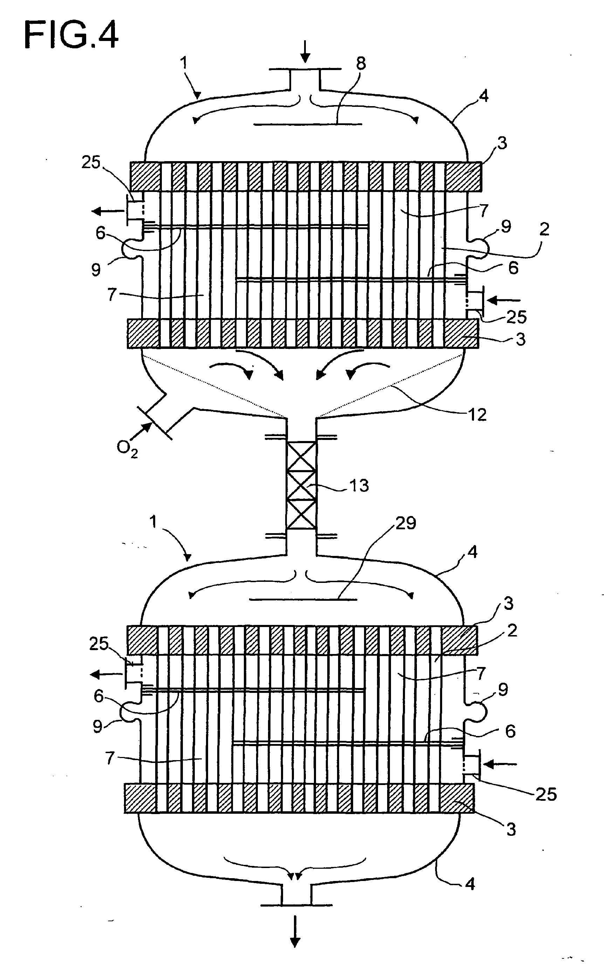

Die Ausführungsform in Fig. 4 zeigt zwei, vertikal übereinander angeordnete Reaktoren 1, mit einem statischen Mischer 13 im Verbindungsrohr zwischen den beiden Reaktoren 1. In der unteren Haube des oberen Reaktors 1 sind Lochbleche 12 angeordnet, zwecks Vergleichmäßigung des unterhalb desselben zwischeneingespeisten Sauerstoffstromes.

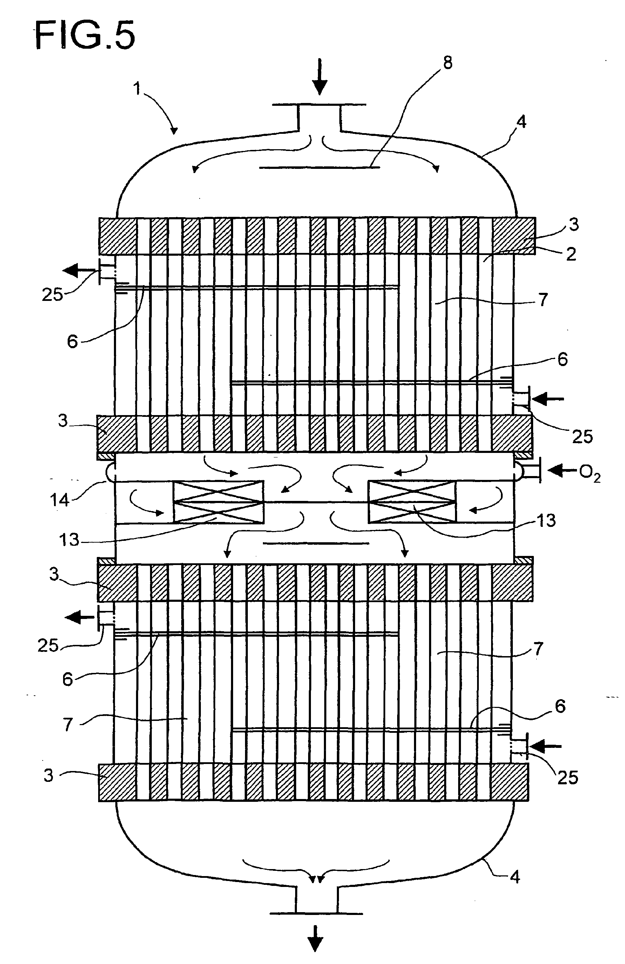

Fig. 5 zeigt eine weitere Ausführungsform mit beispielhaft zwei kompakt übereinander angeordneten Reaktoren 1, wobei aus Gründen der Raumersparnis auf die untere Haube des oberen Reaktors 1 sowie auf die obere Haube des unteren Reaktors 1 verzichtet wurde. Im Bereich zwischen den beiden Reaktoren ist eine Zwischeneinspeisung von Sauerstoff (O₂) über eine am Reaktorumfang aufgeschweißte Halbschale 14 vorgesehen ist. Nach der Zwischeneinspeisung von Sauerstoff ist ein statischer Mischer 13 angeordnet.

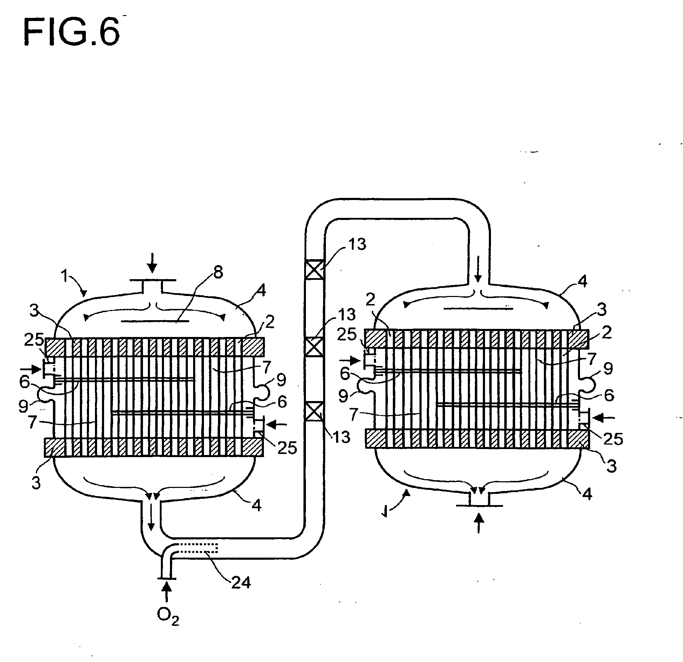

Die Ausführungsform in Fig. 6 zeigt zwei hintereinander geschaltete Reaktoren 1, mit Zwischeneinspeisung von Sauerstoff über ein an seinem Umfang perforiertes Rohr 15, das in das Verbindungsrohr zwischen den beiden Reaktoren mündet, sowie mit statischen Mischern 13 im Verbindungsrohr zwischen den beiden Reaktoren.

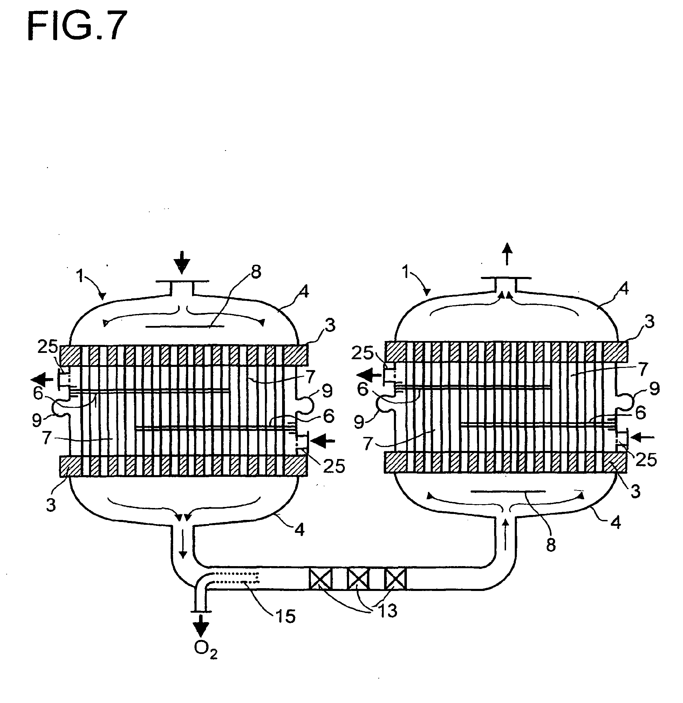

Die in Fig. 7 dargestellte Ausführungsform unterscheidet sich von der Ausführungsform in Fig. 6 dadurch, dass der erste Reaktor vom Reaktionsgemisch von oben nach unten und der zweite Reaktor von unten nach oben durchströmt wird.

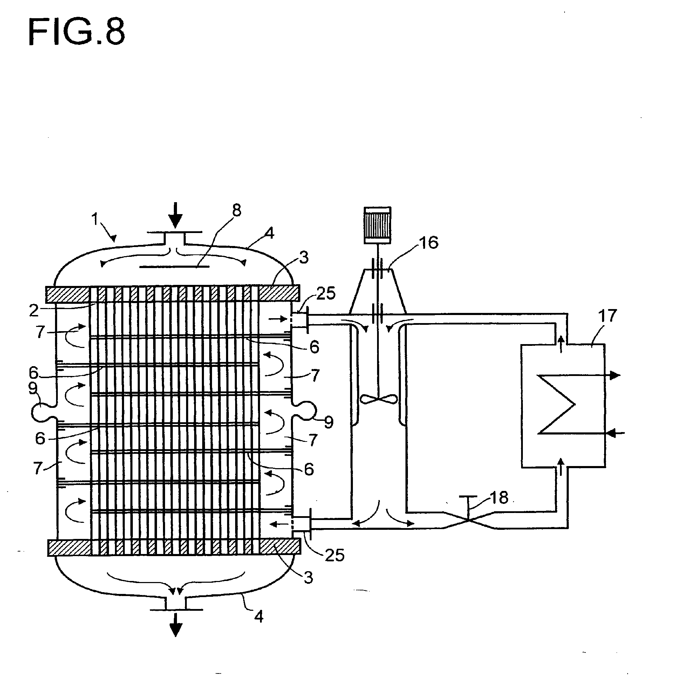

Fig. 8 zeigt beispielhaft einen Reaktor 1 im Längsschnitt mit Darstellung des Wärmetauschmittelkreises, über eine Pumpe 16, einen außenliegenden Kühler 17 und ein Regelventil 18.

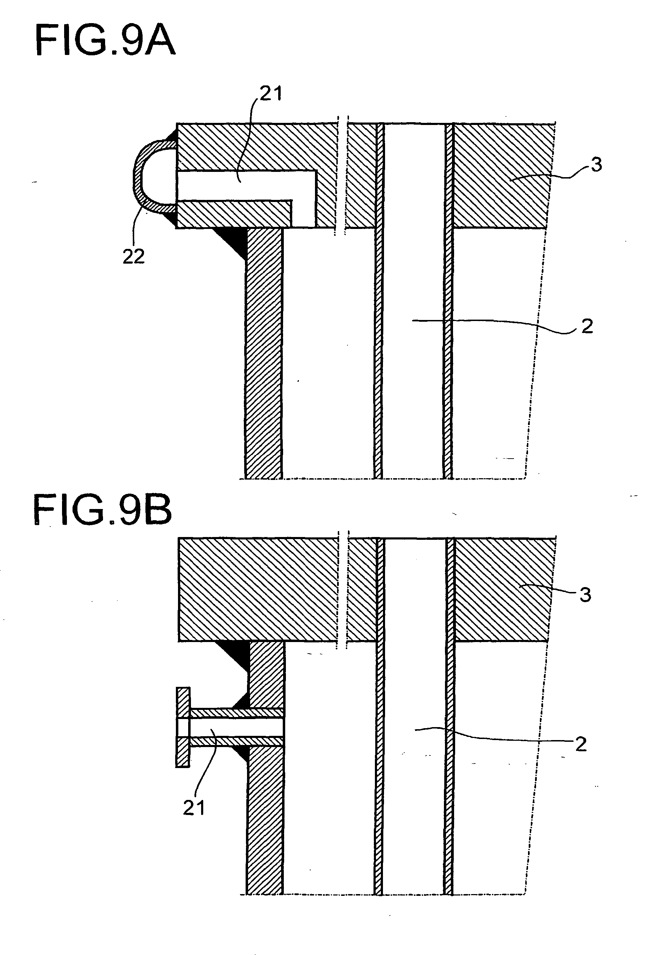

Der Ausschnitt in Fig. 9A zeigt eine gewinkelte Entlüftungsbohrung 21 im Rohrboden 3, mit Halbschale 22 über deren Entlüftungsbohrung 21.

Der Ausschnitt in Fig. 9B zeigt eine weitere Variante einer Entlüftungsbohrung 21, hier am Reaktormantel.

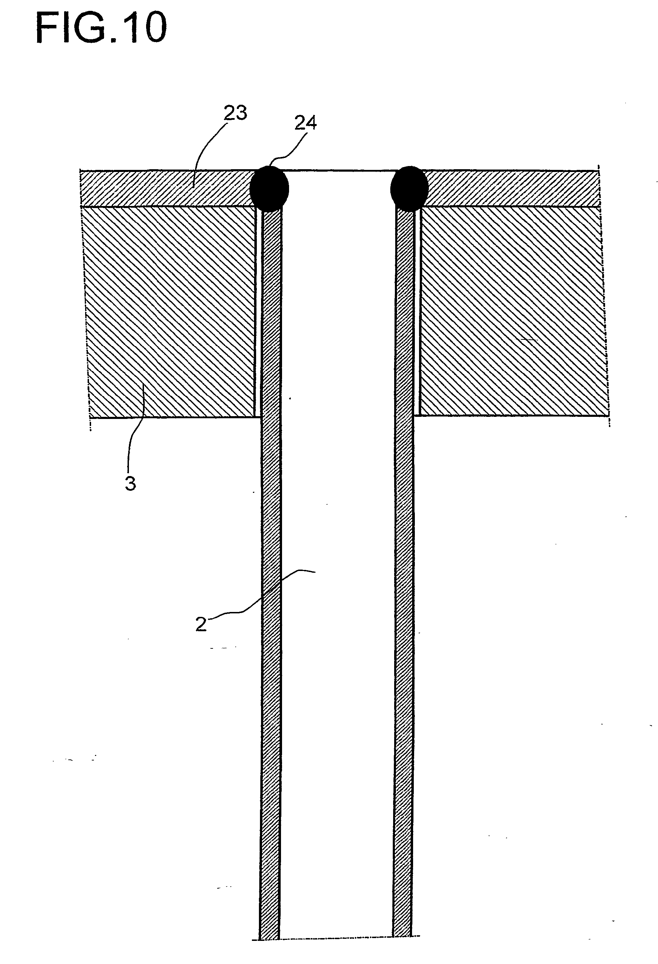

Der Ausschnitt in Fig. 10 zeigt die Verbindung der Kontaktrohre 2 mit der Plattierung 23 des Rohrbodens 3 in Form einer Schweißnaht 24.

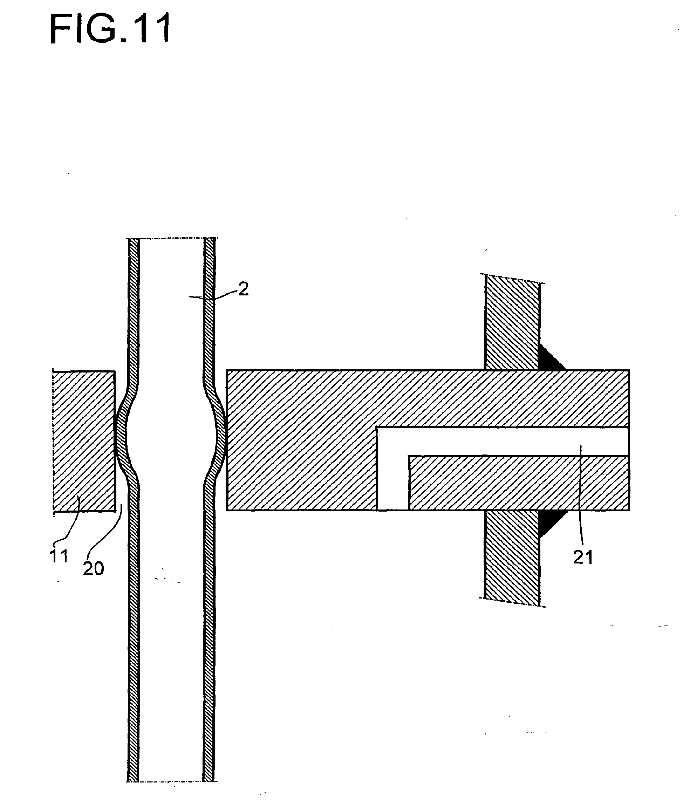

Der Ausschnitt in Fig. 11 zeigt die Verengung des Spaltes 20 zwischen einem Kontaktrohr 2 und einem Trennblech 11 durch Anwalzung des Kontaktrohrs an das Trennblech sowie eine gewinkelte Entlüftungsbohrung 21 im Trennblech 11.

### Bezugszeichenliste

- 1: Reaktor
- 2: Kontaktrohre
- 3: Rohrböden
- 4: Hauben
- 5: Zwischenraum zu Kontakrohren
- 6: Umlenkbleche
- 7: Durchtrittsöffnungen
- 8: Prallplatte
- 9: Kompensatoren
- 10: Pratzen
- 11: Trennbleche
- 12: Lochbleche
- 13: statische Mischer
- 14: Halbschale über Reaktorumfang für O₂-Einspeisung
- 15: perforiertes Rohr
- 16: Pumpe
- 17: Kühler
- 18: Regelventil
- 19: Blechstreifen zur Abdichtung ("sealing strips")
- 20: Spalte zwischen Kontaktrohren (2) und Umlenkblechen (6) bzw. Trennblechen (11)
- 21: Entlüftungsbohrung
- 22: Halbschale über Entlüftungsbohrung (21)
- 23: Plattierung auf Rohrboden (3)
- 24: Schweißnaht der Kontaktrohre (2) mit Plattierung (23)
- 25: Stutzen oder Teilringkanäle
- O₂: Sauerstoff-Zwischeneinspeisung

## Patentansprüche

1. Verfahren zur Herstellung von Chlor durch Gasphasenoxidation von Chlorwasserstoff mit einem molekularen Sauerstoff enthaltenden Gasstrom in Gegenwart eines Festbettkatalysators, **dadurch gekennzeichnet, dass** man das Verfahren in einem Reaktor (1) mit einem Bündel von parallel zueinander, in der Reaktorlängsrichtung angeordneten Kontaktrohren (2) durchführt, die an ihren Enden in Rohrböden (3) befestigt sind, mit je einer Haube (4) an beiden Enden des Reaktors (1), sowie mit einem oder mehreren, senkrecht zur Reaktorlängsrichtung im Zwischenraum (5) zwischen den Kontaktrohren (2) angeordneten Umlenkblechen (6), die alternierend einander gegenüberliegende Durchtrittsöffnungen (7) an der Innenwand des Reaktors (1) freilassen, wobei die Kontaktrohre (2) mit dem Festbettkatalysator befüllt sind, der Chlorwasserstoff sowie der molekularen Sauerstoff enthaltende Gasstrom von einem Reaktorende über eine Haube (4) durch die Kontaktrohre (2) geleitet und das gasförmige Reaktionsgemisch vom entgegengesetzten Reaktorende über die zweite Haube (4) abgezogen und durch den Zwischenraum (5) um die Kontaktrohre (2) ein flüssiges Wärmetauschmittel geleitet wird.

2. Verfahren nach Anspruch 1, **dadurch gekennzeichnet, dass** man das Verfahren in einem Reaktor (1) durchführt, der im Bereich der Durchtrittsöffnungen (7) unberohrt ist.

3. Verfahren nach Anspruch 1 oder 2, **dadurch gekennzeichnet, dass** man das Verfahren in einem Reaktor (1) durchführt, der zylinderförmig ist, mit bevorzugt kreissegmentförmig ausgebildeten Umlenkblechen (6).

4. Verfahren nach einem der Ansprüche 1 bis 3, **dadurch gekennzeichnet, dass** man das Verfahren in einem Reaktor (1) durchführt, worin alle Umlenkbleche (6) jeweils gleichgroße Durchtrittsöffnungen (7) freilassen.

5. Verfahren nach einem der Ansprüche 1 bis 4, **dadurch gekennzeichnet, dass** man das Verfahren in einem Reaktor (1) durchführt, worin die Fläche jeder Durchtrittsöffnung (7) jeweils 5 bis 30 %, bevorzugt 8 bis 14 %, des Reaktorquerschnitts beträgt.

6. Verfahren nach einem der Ansprüche 1 bis 5, **dadurch gekennzeichnet, dass** man das Verfahren in einem Reaktor mit 100 bis 20.000, bevorzugt mit 5000 bis 15000 Kontaktrohren (2) durchführt.

7. Verfahren nach einem der Ansprüche 1 bis 6, **dadurch gekennzeichnet, dass** man das Verfahren in einem Reaktor (1) durchführt, worin jedes Kontaktrohr (2) eine Länge im Bereich von 1 bis 10 m, bevorzugt von 1,5 bis 8,0 m, besonders bevorzugt im Bereich von 2,0 bis 7,0 m, aufweist.

8. Verfahren nach einem der Ansprüche 1 bis 7, **dadurch gekennzeichnet, dass** man das Verfahren in einem Reaktor (1) durchführt, worin jedes Kontaktrohr (2) eine Wandstärke im Bereich von 1,5 bis 5,0 mm, besonders von 2,0 bis 3,0 mm und einen Rohrinnendurchmesser im Bereich von 10 bis 70 mm, bevorzugt im Bereich von 15 bis 30 mm, aufweist.

9. Verfahren nach einem der Ansprüche 1 bis 8, **dadurch gekennzeichnet, dass** man das Verfahren in einem Reaktor (1) durchführt, dessen Kontaktrohre (2) derart im Innenraum des Reaktor (1) angeordnet sind, dass das Teilungsverhältnis, das heißt das Verhältnis zwischen dem Abstand der Mittelpunkte unmittelbar benachbarte Kontaktrohre (2) und dem Außendurchmesser der Kontaktrohre (2) im Bereich von 1,15 bis 1,6, bevorzugt im Bereich von 1,2 bis 1,4 liegt, wobei eine Dreiecksteilung der Kontaktrohre bevorzugt ist.

10. Verfahren nach einem der Ansprüche 1 bis 9, **dadurch gekennzeichnet, dass** man das Verfahren in einem Reaktor (1) durchführt worin zwischen den Kontaktrohren (2) und den Umlenkblechen (6) Spalte (8) von 0,1 bis 0,4 mm, bevorzugt von 0,15 bis 0,30 mm, vorhanden sind.

11. Verfahren nach einem der Ansprüche 1 bis 10, **dadurch gekennzeichnet, dass** die Umlenkbleche (6) an der Reaktorinnenwand mit Ausnahme der Bereiche der Durchtrittsöffnungen (7) flüssigkeitsdicht befestigt sind.

12. Verfahren nach einem der Ansprüche 1 bis 11, **dadurch gekennzeichnet, dass** man das Verfahren in einem Reaktor (1) durchführt, dessen Umlenkbleche (6) eine Dicke im Bereich von 6 bis 30 mm, bevorzugt von 10 bis 20 mm, aufweisen.

13. Verfahren nach einem der Ansprüche 1 bis 13, **dadurch gekennzeichnet, dass** man das Verfahren in einem Reaktor (1) durchführt, der am Innenmantel in den Bereichen zwischen den Umlenkblechen (6), nicht jedoch in den Bereichen der Durchtrittsöffnungen (7) in Reaktorlängsrichtung angeordnete Blechstreifen aufweist.

14. Verfahren nach einem der Ansprüche 1 bis 13, **dadurch gekennzeichnet, dass** man das Verfahren in einem Reaktor (1) durchführt, der einen oder mehrere Kompensatoren (9) im Reaktormantel aufweist.

15. Verfahren nach einem der Ansprüche 1 bis 14, **dadurch gekennzeichnet, dass** man das Verfahren in einem Reaktor (1), mit für die Zu- und Abführung des Wärmetauschmittels am Reaktormantel vorgesehenen Stutzen oder Teilringkanälen (25), die Öffnungen zum Reaktorinnenraum bevorzugt mit kreisförmigem oder rechteckigem Querschnitt und einem Öffnungsverhältnis im Bereich von 5 bis 50 %, aufweisen.

16. Verfahren nach einem der Ansprüche 1 bis 15, **dadurch gekennzeichnet, dass** man das Verfahren in einem Reaktor (1) durchführt, der in Bezug auf eine Querschnittsebene in der Reaktormitte symmetrisch aufgebaut ist.

17. Verfahren nach einem der Ansprüche 1 bis 16, **dadurch gekennzeichnet, dass** man das gasförmige Reaktionsgemisch und das flüssige Wärmetauschmittel im Kreuzgegenstrom oder im Kreuzgleichstrom durch den Reaktor (1) leitet.

18. Verfahren nach einem der Ansprüche 1 bis 17, **dadurch gekennzeichnet, dass** der der Zuführung des gasförmigen Reaktionsgemisches zugewandte Bereich der Kontaktrohre (2) auf eine Länge von 5 bis 20 %, bevorzugt auf eine Länge von 5 bis 10 % der Gesamtlänge der Kontaktrohre (2) mit einem Inertmaterial befüllt ist.

19. Verfahren nach einem der Ansprüche 1 bis 18, **dadurch gekennzeichnet, dass** alle Bauteile des Reaktors (1), mit denen das Reaktionsgas in Berührung kommt, aus Reinnickel oder einer Nickelbasislegierung hergestellt oder mit Reinnickel oder einer Nickelbasislegierung plattiert sind.

20. Verfahren nach Anspruch 19, **dadurch gekennzeichnet, dass** die Kontaktrohre (2) aus Reinnickel oder einer Nickelbasislegierung hergestellt und die Rohrböden (3) mit Reinnickel oder einer Nickelbasislegierung plattiert sind und dass die Kontaktrohre (2) lediglich an der Plattierung mit den Rohrböden verschweißt sind.

21. Verfahren nach einem der Ansprüche 1 bis 20, **dadurch gekennzeichnet, dass** der Reaktor (1) zwei oder mehrere Reaktionszonen aufweist, die mittels Trennblechen (11) weitgehend flüssigkeitsdicht getrennt sind, insbesondere durch Anwalzung der Kontaktrohre (2) an die Trennbleche (11).

22. Verfahren nach einem der Ansprüche 1 bis 19, **dadurch gekennzeichnet, dass** man das Verfahren in zwei oder mehreren Reaktoren (1) durchführt.

23. Verfahren nach Anspruch 20 oder 22, **dadurch gekennzeichnet, dass** zwischen den Reaktoren (1) statische Mischer (13) angeordnet sind.

24. Verfahren nach einem der Ansprüche 1 bis 22, **dadurch gekennzeichnet, dass** Entlüftungsbohrungen für das Wärmetauschmittel im Reaktormantel und/oder in den Rohrböden (3) und/oder in den Trennblechen (11) vorgesehen sind.

25. Verfahren nach einem der Ansprüche 1 bis 24, **dadurch gekennzeichnet, dass** das Wärmetauschmittel über eine Pumpe (16) über einen außenliegenden Kühler (17) geleitet wird, wobei Pumpe (16) und Kühler (17) parallel zur Reaktorlängsrichtung am Reaktoraußenmantel angeordnet sind, bevorzugt dass lediglich ein Teilstrom von maximal 15 % des gesamten Wärmetauschmittelstromes über ein Regelventil (18) über den außenliegenden Kühler (17) geleitet wird.

## Claims

1. A process for preparing chlorine by gas-phase oxidation of hydrogen chloride by means of a gas stream comprising molecular oxygen in the presence of a fixed-bed catalyst, which is carried out in a reactor (1) having a bundle of parallel catalyst tubes (2) which are aligned in the longitudinal direction of the reactor and are fixed at their ends into tube plates (3), with a cap (4) at each end of the reactor (1) and with one or more deflection plates (6) which are arranged perpendicular to the longitudinal direction of the reactor in the intermediate space (5) between the catalyst tubes (2) and leave passages (7) located alternately on opposite sides of the reactor free next to the interior wall of the reactor (1), with the catalyst tubes (2) being charged with the fixed-bed catalyst, the hydrogen chloride and the gas stream comprising molecular oxygen being passed from one end of the reactor via a cap (4) through the catalyst tubes (2) and the gaseous reaction mixture being taken off from the opposite end of the reactor via the second cap (4) and a liquid heat transfer medium being passed through the intermediate space (5) around the catalyst tubes (2).

2. The process according to claim 1 carried out in a reactor (1) which has no tubes in the region of the passages (7).

3. The process according to claim 1 or 2 carried out in a reactor (1) which is cylindrical and is provided with deflection plates (6) which preferably have the shape of a segment of a circle.

4. The process according to any of claims 1 to 3 carried out in a reactor (1) in which all deflection plates (6) leave openings (7) which each have the same size free.

5. The process according to any of claims 1 to 4 carried out in a reactor (1) in which the area of each passage (7) is from 5 to 30%, preferably from 8 to 14%, of the cross section of the reactor.

6. The process according to any of claims 1 to 5 carried out in a reactor having from 100 to 20 000, preferably from 5 000 to 15 000, catalyst tubes (2).

7. The process according to any of claims 1 to 6 carried out in a reactor (1) in which each catalyst tube (2) has a length in the range from 1 to 10 m, preferably from 1.5 to 8.0 m, particularly preferably in the range from 2.0 to 7.0 m.

8. The process according to any of claims 1 to 7 carried out in a reactor (1) in which each catalyst tube (2) has a wall thickness in the range from 1.5 to 5.0 mm, in particular from 2.0 to 3.0 mm, and an internal diameter in the range from 10 to 70 mm, preferably in the range from 15 to 30 mm.

9. The process according to any of claims 1 to 8 carried out in a reactor (1) whose catalyst tubes (2) are arranged in the interior space of the reactor (1) in such a way that the separation ratio, i.e. the ratio of the distance between the midpoints of directly adjacent catalyst tubes (2) to the external diameter of the catalyst tubes (2) is in the range from 1.15 to 1.6, preferably in the range from 1.2 to 1.4, with the catalyst tubes preferably being present in a triangular arrangement.

10. The process according to any of claims 1 to 9 carried out in a reactor (1) in which gaps (8) of from 0.1 to 0.4 mm, preferably from 0.15 to 0.30 mm, are present between the catalyst tubes (2) and the deflection plates (6).

11. The process according to any of claims 1 to 10, wherein the deflection plates (6) are fixed in a liquid-tight manner to the interior wall of the reactor except in the regions of the passages (7).

12. The process according to any of claims 1 to 11 carried out in a reactor (1) whose deflection plates (6) have a thickness in the range from 6 to 30 mm, preferably from 10 to 20 mm.

13. The process according to any of claims 1 to 13 carried out in a reactor (1) which has metal strips arranged in the longitudinal direction of the reactor on the interior wall in the regions between the deflection plates (6) but not in the regions of the passages (7).

14. The process according to any of claims 1 to 13 carried out in a reactor (1) having one or more compensators (9) in its outer wall.

15. The process according to any of claims 1 to 14 carried out in a reactor (1) having ports or part-ring channels (25) which are provided on the outer wall of the reactor for the introduction and discharge of the heat transfer medium and have openings into the interior space of the reactor which preferably have a circular or rectangular cross section and an open ratio in the range from 5 to 50%.

16. The process according to any of claims 1 to 15 carried out in a reactor (1) which has a symmetrical construction about a cross-sectional plane in the middle of the reactor.

17. The process according to any of claims 1 to 16, wherein the gaseous reaction mixture and the liquid heat transfer medium are passed through the reactor (1) in cross-countercurrent or in cross-cocurrent.

18. The process according to any of claims 1 to 17, wherein the region of the catalyst tubes (2) nearest the end at which the gaseous reaction mixture is fed in is filled with an inert material to a length of from 5 to 20%, preferably a length of from 5 to 10%, of the total length of the catalyst tubes (2).

19. The process according to any of claims 1 to 18, wherein all components of the reactor (1) which come into contact with the reaction gas are made of pure nickel or a nickel-based alloy or are plated with pure nickel or a nickel-based alloy.

20. The process according to claim 19, wherein the catalyst tubes (2) are made of pure nickel or a nickel-based alloy and the tube plates (3) are plated with pure nickel or a nickel-based alloy and the catalyst tubes (2) are welded to the tube plates only at the plating.

21. The process according to any of claims 1 to 20, wherein the reactor (1) has two or more reaction zones which are separated in a largely liquid-tight manner by means of dividing plates (11), in particular by rolling of the catalyst tubes (2) onto the dividing plates (11).

22. The process according to any of claims 1 to 19 carried out in two or more reactors (1).

23. The process according to claim 20 or 22, wherein static mixers (13) are installed between the reactors (1).

24. The process according to any of claims 1 to 22, wherein ventilation holes for the heat transfer medium are provided in the outer wall of the reactor and/or in the tube plates (3) and/or in the dividing plates (11).

25. The process according to any of claims 1 to 24, wherein the heat transfer medium is conveyed via a pump (16) and an external cooler (17), with pump (16) and cooler (17) being located on the outer wall of the reactor in a direction parallel to the longitudinal direction of the reactor, preferably so that only a substream of not more than 15% of the total heat transfer medium flow is passed via a regulating valve (18) and the external cooler (17).

## Revendications

1. Procédé pour la production de chlore par oxydation en phase gazeuse de gaz chlorhydrique avec un flux gazeux contenant de l'oxygène moléculaire en présence d'un catalyseur à lit fixe, **caractérisé en ce que** le procédé est mis en oeuvre dans un réacteur (1) muni d'un faisceau de tubes contacts (2) rangés parallèlement les uns aux autres dans la direction longitudinale du réacteur, fixés par leurs extrémités à des plateaux à tubes (3), ayant chacun un couvercle (4) à chacune des deux extrémités du réacteur (1), et d'un ou de plusieurs déflecteurs (6) disposés dans l'espace interstitiel (5) entre les tubes contacts (2), perpendiculairement à la direction longitudinale du réacteur, qui découvrent alternativement des orifices de transit (7) se situant en face les uns des autres sur la paroi intérieure du réacteur (1), dans lequel les tubes contacts (2) sont remplis du catalyseur à lit fixe, dans lequel le gaz chlorhydrique ainsi que le flux gazeux contenant l'oxygène moléculaire sont dirigés d'une extrémité du réacteur vers un couvercle (4) en passant par les tubes contacts (2), et dans lequel le mélange réactionnel sous forme gazeuse est soutiré de l'extrémité opposée du réacteur vers le deuxième couvercle (4), et un agent fluide échangeur de chaleur est dirigé à travers l'espace interstitiel (5) autour des tubes contacts (2).

2. Procédé selon la revendication 1, **caractérisé en ce que** le procédé est mis en oeuvre dans un réacteur (1) qui n'est pas perforé au niveau des orifices de transit (7).

3. Procédé selon la revendication 1 ou 2, **caractérisé en ce que** le procédé est mis en oeuvre dans un réacteur (1), qui est de forme cylindrique, avec des déflecteurs (6) mis en forme de préférence en segment circulaire.

4. Procédé selon l'une quelconque des revendications 1 à 3, **caractérisé en ce que** le procédé est mis en oeuvre dans un réacteur (1) dans lequel tous les déflecteurs (6) découvrent des orifices de transit (7) de même grandeur respective.

5. Procédé selon l'une quelconque des revendications 1 à 4, **caractérisé en ce que** le procédé est mis en oeuvre dans un réacteur (1) dans lequel les surfaces de chaque orifice de transit (7) représentent respectivement de 5 à 30 %, de préférence de 8 à 14 %, de la coupe transversale du réacteur.

6. Procédé selon l'une quelconque des revendications 1 à 5, **caractérisé en ce que** le procédé est mis en oeuvre dans un réacteur avec 100 à 20 000, de préférence avec 5 000 à 15 000 tubes contacts (2).

7. Procédé selon l'une quelconque des revendications 1 à 6, **caractérisé en ce que** le procédé est mis en oeuvre dans un réacteur (1) dans lequel chaque tube contact (2) présente une longueur dans la plage de 1 à 10 m, de préférence de 1,5 à 8,0 m, et de manière particulièrement préférée dans une plage de 2,0 à 7,0 m.

8. Procédé selon l'une quelconque des revendications 1 à 7, **caractérisé en ce que** le procédé est mis en oeuvre dans un réacteur (1) dans lequel chaque tube contact (2) présente une épaisseur de paroi dans la plage de 1,5 à 5, 0 mm, en particulier de 2,0 à 3,0 mm, et un diamètre intérieur de tube dans la plage de 10 à 70 mm, de préférence dans la plage de 15 à 30 mm.

9. Procédé selon l'une quelconque des revendications 1 à 8, **caractérisé en ce que** le procédé est mis en oeuvre dans un réacteur (1) dont les tubes contacts (2) sont arrangés dans l'espace intérieur du réacteur (1) de telle manière que le rapport de séparation, c'est-à-dire le rapport entre l'intervalle des centres des tubes contacts (2) immédiatement voisins et le diamètre extérieur des tubes contacts (2), lorsqu'un agencement triangulaire des tubes contacts est préféré, est dans la plage de 1,15 à 1,6, de préférence dans la plage de 1,2 à 1,4.

10. Procédé selon l'une quelconque des revendications 1 à 9, **caractérisé en ce que** le procédé est mis en oeuvre dans un réacteur (1) dans lequel des intervalles (8) de 0,1 à 0,4 mm, de préférence de 0,15 à 0,30 mm, sont assurés entre les tubes contacts (2) et les déflecteurs (6).

11. Procédé selon l'une des revendications 1 à 10, **caractérisé en ce que** les déflecteurs (6) sont fixés de manière étanche sur la paroi intérieure du réacteur, à l'exception de la zone des orifices de transit (7).

12. Procédé selon l'une quelconque des revendications 1 à 11, **caractérisé en ce que** le procédé est mis en oeuvre dans un réacteur (1), dont les déflecteurs (6) présentent une épaisseur dans la plage de 6 à 30 mm, de préférence de 10 à 20 mm.

13. Procédé selon l'une quelconque des revendications 1 à 12, **caractérisé en ce que** le procédé est mis en oeuvre dans un réacteur (1) qui présente sur le revêtement intérieur, dans la zone située entre les déflecteurs (6), mais toutefois pas dans la zone des orifices de transit (7), des rubans de tôle dans la direction longitudinale du réacteur.

14. Procédé selon l'une quelconque des revendications 1 à 13, **caractérisé en ce que** le procédé est mis en oeuvre dans un réacteur (1) qui présente un ou plusieurs potentiomètres (9) dans le revêtement de réacteur.

15. Procédé selon l'une quelconque des revendications 1 à 14, **caractérisé en ce que** le procédé est mis en oeuvre dans un réacteur (1) muni de canaux (25) annulaires ou tubulaires sur le revêtement de réacteur, prévus pour l'alimentation et l'évacuation de l'agent échangeur de chaleur, qui présentent des ouvertures vers l'espace intérieur du réacteur, de préférence avec une section transversale de forme circulaire ou rectangulaire, et un taux d'ouverture dans la plage de 5 à 50 %.

16. Procédé selon l'une quelconque des revendications 1 à 15, **caractérisé en ce que** le procédé est mis en oeuvre dans un réacteur (1) qui est construit symétriquement par rapport à un plan de coupe transversal dans le milieu du réacteur.

17. Procédé selon l'une quelconque des revendications 1 à 16, **caractérisé en ce que** le mélange réactionnel gazeux et l'agent échangeur de chaleur fluide sont dirigés dans le réacteur (1) en des flux se croisant et allant dans le même sens ou en sens contraire.

18. Procédé selon l'une quelconque des revendications 1 à 17, **caractérisé en ce que** la partie des tubes contacts (2) consacrée à l'acheminement du mélange réactionnel gazeux est remplie d'un matériau inerte sur une longueur de 5 à 20 %, de préférence sur une longueur de 5 à 10 %, de la longueur totale des tubes contacts (2).

19. Procédé selon l'une quelconque des revendications 1 à 18, **caractérisé en ce que** toutes les parties du réacteur (1) avec lesquelles le gaz réactionnel vient en contact sont fabriquées en nickel pur, ou en un alliage à base de nickel, ou sont plaquées avec du nickel pur ou avec un alliage à base de nickel.

20. Procédé selon la revendication 19, **caractérisé en ce que** les tubes contacts (2) sont fabriqués en nickel pur ou en un alliage à base de nickel, et les plateaux à tubes (3) sont plaqués avec du nickel pur ou avec un alliage à base de nickel, et les tubes contacts (2) sont simplement soudés sur le revêtement plaqué des plateaux à tubes.

21. Procédé selon l'une quelconque des revendications 1 à 20, **caractérisé en ce que** le réacteur (1) présente deux ou plus de deux zones de réaction, qui sont séparées dans une large mesure de façon étanche au moyen de lames séparatrices (11), particulièrement grâce à un enroulement des lames séparatrices (11) sur les tubes contacts (2).

22. Procédé selon l'une quelconque des revendications 1 à 19, **caractérisé en ce que** le procédé est mis en oeuvre dans deux ou plus de deux réacteurs (1).

23. Procédé selon la revendication 20 ou 22, **caractérisé en ce que** des mélangeurs statiques (13) sont disposés entre les réacteurs (1).

24. Procédé selon l'une quelconque des revendications 1 à 22, **caractérisé en ce que** des évents pour l'agent échangeur de chaleur sont prévus dans le revêtement de réacteur et/ou dans les plateaux à tubes (3) et/ou dans les lames séparatrices (11).

25. Procédé selon l'une quelconque des revendications 1 à 24, **caractérisé en ce que** l'agent échangeur de chaleur est dirigé par une pompe (16) vers un condenseur (17) situé à l'extérieur, dans lequel la pompe (16) et le condenseur (17) sont disposés sur le revêtement extérieur de réacteur parallèlement à la direction longitudinale du réacteur, et seul un flux partiel d'un maximum de 15 % du flux total de l'agent échangeur de chaleur est dirigé par une vanne de régulation (18) vers le condenseur (17) situé à l'extérieur.
